# FASCICULE DE BREVET EUROPEEN

(11) **EP 3 467 570 B1**
(45) Date de publication et mention de la délivrance du brevet: **11.08.2021**
(21) Numéro de dépôt: 18196731.6
(22) Date de dépôt: 26.09.2018
(51) Int. Cl.: G02B 27/01

(54) **GESTION DE LA RIVALITE OCULAIRE**
STEUERUNG DER OKULAREN RIVALITÄT
BINOCULAR RIVALRY MANAGEMENT

(30) Priorité: 05.10.2017 FR 1701031
(43) Date de publication de la demande: 10.04.2019
(73) Titulaire: Thales, 92400 Courbevoie (FR)
(72) Inventeur: HOURLIER, Sylvain, 33700 MERIGNAC (FR); AYMERIC, Bruno, 33700 MERIGNAC (FR)
(74) Mandataire: Marks & Clerk France

(56) Documents cités:
- WO-A1-2016/107921
- US-A- 5 233 458
- US-A1- 2016 077 345
- US-A1- 2016 139 432
- PATTERSON R ET AL: "Binocular rivalry and head-worn displays", HUMAN FAC, HUMAN FACTORS AND ERGONOMICS SOCIETY, SANTA MONICA, CA, US, vol. 49, no. 6, 1 décembre 2007 (2007-12-01), pages 1083-1096, XP008166156, ISSN: 0018-7208, DOI: 10.1518/001872007X249947

## Description

### Domaine de l'invention

L'invention concerne le domaine technique des procédés et des systèmes d'affichage en général, et des procédés ou systèmes de gestion de la rivalité oculaire en particulier.

### Etat de la Technique

Un affichage « tête haute » ou « tête portée » (en anglais « Head Up Display, HUD) permet au pilote d'un véhicule de surveiller son environnement en même temps que des informations fournies par ses instruments de bord. Ce type de dispositif superpose des informations particulières (e.g. pilotage, navigation, mission) dans le champ de vision du pilote. Différents dispositifs sont connus dans l'état de la technique, notamment l'utilisation de projecteurs, de miroirs semi-transparents, de surfaces de projection transparentes (e.g. réalité augmentée) ou opaques (e.g. réalité virtuelle), voir dont l'opacité est configurable.

La fusion binoculaire est un phénomène de perception visuelle qui permet au système visuel humain de produire une image unique à partir de deux images, l'une provenant de chaque oeil. Cette fusion, quand elle est imparfaite, peut produire de la diplopie (vision double) ou de la rivalité binoculaire (soit une alternance entre les images rivales dans le temps, soit la perception d'une image composite mais sans fusion, laquelle peut être fluctuante).

La rivalité oculaire est un phénomène connu et documenté dans la littérature.

La rivalité binoculaire est un phénomène de vision pendant lequel la conscience alterne entre des images très différentes présentées à chaque oeil. Lorsque les images sont très similaires, elles fusionnent ensemble en une image binoculaire unique. Si les différences dépassent un seuil tolérable, elles sont superposées quelques instants, puis l'une d'elle est perçue, suivie de l'autre, en un cycle d'alternances image droite - image gauche, appelées renversements. Les renversements entre les images ne sont pas instantanés mais marqués par une image composite instable, pendant laquelle un front d'onde parcourt l'image, transformant l'image droite en image gauche (ou l'inverse).

Lorsque les informations visuelles présentées à chaque oeil sont différentes, il peut se produire une « disparition » de certains éléments présents dans l'une ou l'autre des images. Ces disparitions sont marquées dans la zone fovéale (champ centré autour de l'axe visuel) et se produisent généralement lorsque des informations sont présentes au même endroit dans les deux images et entrent en compétition sur l'attention qu'elles nécessitent pour être « surveillée ». Certains systèmes exploitent ces suppressions pour fournir des informations instrumentales à des endroits spécifiques du champ visuel, par exemple en périphérie et sous un format qui n'entre pas en compétition avec le paysage extérieur.

Certains dispositifs d'affichage, par exemple HUD, peuvent être binoculaires (i.e. sollicitent les deux yeux), d'autres sont monoculaires (i.e. un seul oeil). Dans de tels systèmes à tête portée monoculaire, des informations sont surimposées à l'environnement.

Certaines applications de gestion de l'affichage de systèmes monoculaires présentent une visée sous forme de réticule de désignation (e.g. une croix ou un point au centre du champ visuel). Afin de supprimer la rivalité oculaire, le pilote doit alors fermer un oeil pour ne solliciter qu'un seul de ses deux yeux. Dans certains cas, il n'est pas nécessaire de fermer un oeil (le réticule peut être perçu avec les deux yeux ouverts lorsque certaines conditions de direction spatiale sont remplies, avec un risque de suppression minimisé). Mais de manière générale, cette gymnastique visuelle du pilote est contraignante, fatigante et surtout n'est pas optimale. L'usage de tels systèmes est par ailleurs réservé à du personnel entraîné.

En aéronautique, certains types d'information peuvent créer des suppressions fréquentes. C'est le cas du symbole appelé « vecteur vitesse » (ou Flight Path Vector - FPV - en anglais). Le FPV montre la direction dans laquelle se déplace un avion. Lors d'une approche vers une piste d'atterrissage, le FPV sera dans la même direction que la piste. Le problème de rivalité oculaire va se révéler pleinement, puisque le pilote devra porter son attention sur deux éléments partageant la même position dans le champ visuel mais vu différemment par les deux yeux.

Au-delà même du problème de rivalité oculaire (i.e. physiologique), un problème de rivalité attentionnelle peut se poser. En effet, il est possible que l'attention du pilote utilisant un HUD soit entièrement captée par la symbologie affichée dans l'axe de sa vision et qu'il sous-estime alors l'apparition d'obstacles dans l'environnement extérieur dans ce même axe. Les pilotes militaires sont généralement entraînés à porter leur attention alternativement sur la symbologie puis sur l'environnement extérieur de fond.

La littérature scientifique et la littérature brevet décrivent peu de solutions satisfaisantes à cette gestion de l'extinction cognitive produite par la rivalité oculaire, en particulier dans le cas de système d'affichage monoculaire. La rivalité attentionnelle a fortiori est encore moins abordée.

Le document de brevet US2016/077345 décrit un dispositif d'affichage monoculaire monté sur la tête qui est positionné de façon ajustable devant l'œil d'un utilisateur. Le dispositif d'affichage monoculaire affiche les informations dans un premier champ de vision. Un cache est positionné devant un oeil sans affichage de l'utilisateur. Le cache bloque un second champ de vision de l'œil sans affichage, le blocage étant réglé de façon à bloquer au moins une partie du second champ de vision qui correspond au premier champ de vision contenant les informations affichées. Le cache peut être un cache électrique tel qu'un cache comprenant une matière à cristaux liquides ou un matériau électro-chromique. Cette approche présente des limitations.

Le document de brevet US2016/139432 décrit un appareil, une méthode et un programme informatique pour améliorer la vision nocturne. Une paire de lunettes comprend : un capteur qui détecte l'intensité d'une lumière près d'un utilisateur ; un dispositif comparateur qui compare l'intensité lumineuse détectée près de l'utilisateur à un seuil de luminosité ; et un projecteur intégré dans la paire de lunettes projetant simultanément une lumière rouge dans chaque oeil de l'utilisateur si l'intensité lumineuse détectée près de l'utilisateur devient inférieure à ce seuil. Cette approche présente des limitations.

Il existe un besoin pour des systèmes et des procédés de gestion de l'affichage de type HUD monoculaire.

### Résumé de l'invention

L'invention concerne la gestion de la rivalité oculaire, et par extension de la rivalité attentionnelle, dans un système d'affichage de données. Le procédé comprend les étapes consistant à déterminer des paramètres d'environnement visuel; à déterminer un risque de suppression visuelle par rivalité oculaire entre un élément de l'environnement visuel et un élément affiché par le dispositif d'affichage en fonction des paramètres d'environnement visuel; et en fonction du risque déterminé, à ajuster un ou plusieurs paramètres d'affichage du dispositif d'affichage tête haute, un paramètre d'affichage du dispositif d'affichage comprenant un ou plusieurs paramètres comprenant la luminance et/ou la chrominance d'un ou de plusieurs éléments affichés par le dispositif d'affichage, la luminance étant modifiée au cours du temps selon des profils comprenant une ou plusieurs séquences comprenant une séquence de luminance croissante progressive, une séquence de plateau sensiblement constante, une séquence de luminance croissante brusque, une séquence de luminance décroissante progressive. Des développements de l'invention décrivent la gestion de la luminance, de la chrominance et de la géométrie des éléments affichés. Des optimisations dans le domaine de l'avionique sont décrites. Des aspects de logiciel et de système sont décrits (e.g. capteurs de luminosité et/ou ou de suivi du regard, système de type monoculaire ou binoculaire).

Selon les modes de réalisation de l'invention, un aéronef peut être un avion commercial, militaire ou de fret, un drone autonome ou télé piloté, un hélicoptère, ou tout autre moyen de transport pouvant utiliser une visée tête haute. L'invention n'est pas limitée aux applications aéronautiques puisque qu'applicable à d'autres types de véhicule (e.g. voiture, camion, bus, train, bateau, etc).

Avantageusement, un aéronef de type commercial peut embarquer un système d'affichage selon l'invention, qui ne nécessite pas d'entraînement spécifique pour un pilote de ligne civile.

Le procédé détermine la probabilité ou un risque de suppression d'information visuelle. Le cas échéant, par exemple en excès d'un seuil prédéfini, la présentation d'informations peut être techniquement aménagée de manière à accroître ou maximiser la perception visuelle.

L'utilisation de symboles peut être adaptée à des conditions particulières rencontrées lors du vol de l'aéronef, afin d'avoir une efficacité de pilotage maximale ou optimale.

Dans un mode de réalisation, une variable d'ajustement comprend l'ajustement de la luminosité des informations surimposées ou superposées dans le champ visuel du pilote. Cet ajustement de la luminosité peut se faire selon un ou plusieurs schémas prédéfinis. Lesdits schémas peuvent par exemple permettre d'attirer ou de soutenir l'attention visuelle cognitive du pilote. Dans un mode de réalisation, les sollicitations visuelles additionnelles peuvent être effectuées sans pour autant détourner l'attention générale du pilote porté à son environnement. Dans un mode de réalisation, l'ajustement de la luminosité peut être effectué selon des les intervalles de temps particulier et/ou en fonction d'un risque de suppression visuelle. Par exemple, le système visuel du pilote peut être sollicité de manière à réacquérir ou réactiver régulièrement la symbologie spécifiquement mise en oeuvre quand cette dernière est susceptible de faire l'objet d'une extinction cognitive.

L'invention ne permet pas seulement de manipuler ou de causer une attention minimale: elle permet également de gérer une sollicitation visuelle maximale. Par exemple, dans un mode de réalisation, un suivi du regard du pilote est effectué. Le pilote peut porter son attention sur d'autres informations affichées et/ou d'autres directions d'espace dans son champ visuel. L'affichage des symboles peut être optimisé de manière à minimiser la distraction occasionnée.

### Description des figures

Différents aspects et avantages de l'invention vont apparaitre en appui de la description d'un mode préféré d'implémentation de l'invention mais non limitatif, avec référence aux figures ci-dessous :
La figure 1 illustre un exemple de rivalité oculaire;
La figure 2 illustre un exemple de système d'affichage tête-haute;
La figure 3 montre des exemples d'étapes du procédé selon l'invention;
La figure 4 illustre des exemples spécifiques de l'ajustement de l'affichage selon l'invention.

### Description détaillée de l'invention

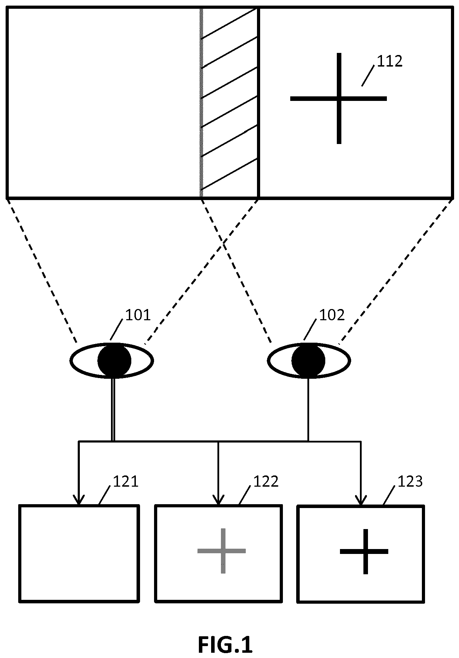

La figure 1 illustre un exemple de rivalité oculaire. Les deux yeux du pilote 101 et 102 perçoivent chacun une image. Les deux images sont normalement fusionnées. Dans le cas d'un système d'affichage monoculaire, il peut être affiché un réticule 112. Les deux images perçues étant différentes, le phénomène de rivalité oculaire peut se produire : le cerveau peut percevoir une image sans réticule 121, une image avec réticule 123 ou bien une image composite ou intermédiaire (e.g. instable, oscillante, etc) 122.

La rivalité oculaire est une manifestation relative à la perception physique effectuée par le système visuel (i.e. la gestion des stimuli visuels). L'apparition d'une rivalité peut être consciente. Elle peut aussi (souvent) être inconsciente. Une rivalité oculaire émergente ou installée n'est pas mesurable directement par un système extérieur: il n'y a pas de manifestation physiologique mesurable associée à une extinction cognitive. Malgré tout, la présence d'une rivalité oculaire (émergente ou installée) peut être indirectement suspectée (par exemple quand les commandes du pilote divergent manifestement e.g. contredisent des consignes de pilotage). De telles divergences peuvent être détectées très rapidement dans le temps (e.g. par comparaison entre les mesures effectuées sur les actuateurs à la disposition du pilote e.g. manche directionnel et les consignes de pilotage ; manipulation du volant en vue de doubler un véhicule alors que la signalisation routière et les éléments d'affichage préconisent d'autres conduites).

Les modes de réalisation de l'invention visent donc à optimiser la gestion de la rivalité oculaire d'un système d'affichage. En réalité, les modes de réalisation de l'invention peuvent également appréhender la rivalité dite « attentionnelle »,

Cette rivalité dite attentionnelle est « interne », i.e. exclusivement cognitive. Le cerveau humain, bien que percevant correctement les signaux visuels (à la limite sans apparition d'une rivalité oculaire), peut « occulter » des éléments d'information. Par exemple, un conducteur automobile totalement concentré sur une manoeuvre de doublement peut faire abstraction d'un témoin lumineux d'excès de vitesse, bien que son système visuel en ait parfaitement décodé et fusionné les stimuli visuels. Un pilote concentré sur un objet présent à l'horizon peut abstraire des objets présents au premier plan, éventuellement dangereux.

Cette rivalité attentionnelle, étant exclusive et propre à chaque cerveau, ne peut pas être mesurée ni inférée (« boîte noire »). En revanche, des rappels (et leurs variations, pour éviter les accoutumances) peuvent être judicieusement mis en oeuvre, pour permettre *in fine* de soutenir l'attention de l'utilisateur (placé dans une situation de risque ou de décision par hypothèse, justifiant un maintien dans un état d'éveil ou de conscience particulier).

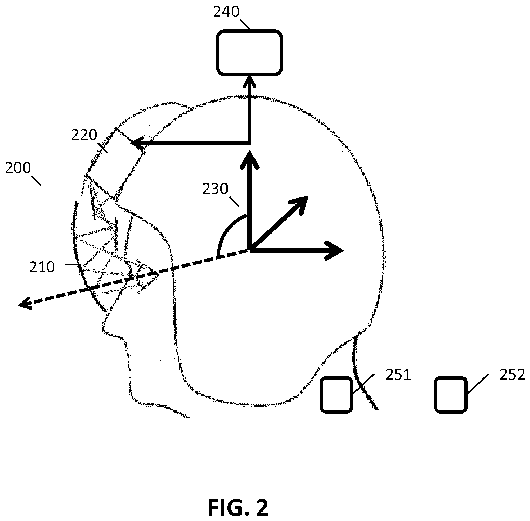

La figure 2 illustre un système d'affichage 200 tête-haute ou HUD. Ce type de système d'affichage présente des informations (par exemple de pilotage) en superposition avec le paysage extérieur (visible par transparence ou tel que capturé et retransmis en vidéo).

Le système d'affichage 200 peut comprendre un afficheur transparent 210 sur lequel une image peut être projetée ou créée permettant de voir cette image en superposition avec une scène « extérieure ». Un système monoculaire comporte un seul afficheur. Un système binoculaire comporte deux afficheurs. Dans des variantes de réalisation la transparence d'un afficheur est variable (ou configurable).

Un afficheur est fixé ou associé à la tête du pilote de manière à ce que l'afficheur maintenu proche de l'œil (« *Near-To-Eye display »* en anglais). Dans l'exemple qui est illustré, l'afficheur est fixé à un casque porté par le pilote. D'autres moyens sont possibles (e.g. lunettes portées, support fixe duquel l'opérateur se rapproche, etc). Dans certains mode de réalisation, un affichage HUD peut être un équipement fixé à l'avion, offrant un champ de vue fixe (en général présentant un champ de vue 40° latéral - 26° vertical). Dans d'autres modes de réalisation, l'affichage tête haute est fixé à un casque ou un appareil de vue porté par le pilote.

Le système d'affichage 200 comporte en outre un sous-système 230 permettant de détecter la direction vers/dans laquelle la tête i.e. de l'opérateur est dirigée. Dans une variante un système de suivi du regard est utilisé (« *eye-tracking »).* Les systèmes permettant ce type de mesure sont divers (mesure optique, électrique, mécanique, etc).

Le système d'affichage 200 comprend ou est associé à un calculateur i.e. des ressources informatiques 240 (e.g. de calcul, de mémoire, graphique, etc). Le calculateur 240 pilote (commande, asservit) le projecteur 220. Le calculateur exploite l'information relative au suivi 230 de la direction de la tête et/ou du regard. Il intègre et manipule diverses informations relatives à l'aéronef et/ou la mission. Il détermine à chaque instant (en continu, selon le rafraichissement vidéo souhaité) l'image opérationnelle devant être affichée sur l'afficheur.

Le système d'affichage 200 peut être associé à une ou plusieurs interfaces homme-machine (IHM), e.g. des périphériques de saisie (souris, clavier, écran tactile, force touch, moyens haptiques, trackpad, trackball, etc), permettant au pilote d'effectuer des sélections parmi plusieurs données proposées ou bien d'entrer des données. Selon les modes de réalisation, l'IHM peut comprendre différents périphériques ou combinaisons de périphériques. Dans certains cas, des commandes vocales peuvent être utilisées. Dans d'autres cas, des interfaces neuronales peuvent être utilisées. Des interfaces de sélection par clignement d'œil peuvent être utilisées.

Dans un mode de réalisation, les conditions de luminosité et/ou les règles régissant la gestion de la luminosité sont prédéfinies (par exemple par la compagnie aérienne).

Dans un mode de réalisation, les conditions de luminosité et/ou les règles régissant la gestion de la luminosité sont configurables par le pilote.

Dans certaines variantes de réalisation, de manière optionnelle, différents capteurs peuvent être utilisés. Par exemple, des capteurs biologiques 251 peuvent être utilisés (e.g. capteur de rythme cardiaque, EEG, capteur posé sur la peau estimant le niveau de transpiration du pilote), de manière à quantifier ou estimer le niveau de stress du pilote. Des capteurs d'environnement ou d'ambiance 252 peuvent être utilisés (e.g. des capteurs de luminosité, de température, d'humidité relative etc).

Dans un mode de réalisation, la luminosité peut être appréhendée de manière globale (illumination globale dans la visière ou dans le cockpit, illumination moyenne de l'environnement extérieur). Dans certains modes de réalisation, la luminosité peut être appréhendée de manière différenciée: certaines directions de l'espace peuvent être diversement illuminées (selon la position du soleil, les conditions atmosphériques et les conditions de réflexion lumineuses locales, l'illumination peut ne pas être uniforme).

Dans un mode de réalisation, la gestion de l'affichage peut être asservie aux conditions de luminosité détectées. En effet, le calculateur peut adapter la luminosité de l'afficheur en fonction de la luminosité (ambiante ou selon la direction d'espace).

Quantitativement, de nombreuses informations peuvent être affichées dans ou via l'afficheur 200. Qualitativement, des informations de différente nature peuvent être manipulées.

Parmi l'ensemble des possibles, une information spécifique revêt une importance particulière en matière de pilotage et occasionne des problèmes techniques d'extinction cognitive du fait des circonstances de son affichage: le vecteur Vitesse (FPV pour « Flight Path Vector » en anglais). Le FPV n'étant vu que par un seul oeil, il est sujet à disparition dans la perception de l'opérateur à cause de la rivalité. L'invention est donc particulièrement bien adaptée pour gérer l'affichage de cette information.

Le vecteur vitesse représente la direction dans laquelle l'aéronef se déplace. Le vecteur vitesse est généralement affiché sous forme de symbole graphique. Les informations relatives à la quantité d'énergie et d'écart de vitesse sont généralement affichées à côté ou proche de ce symbole. Cet ensemble d'informations permet au pilote, tout en regardant à l'extérieur, d'assurer que son aéronef est dans des conditions correctes de vol.

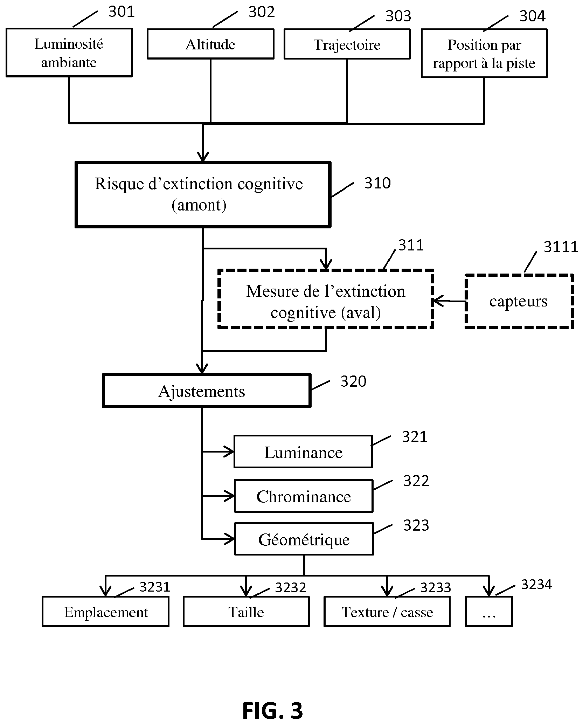

La figure 3 montre des exemples d'étapes du procédé selon l'invention.

Dans un mode de réalisation, le procédé selon l'invention est un procédé de gestion d'affichage de données mis en oeuvre dans un dispositif d'affichage de type monoculaire ou binoculaire, comprenant les étapes consistant à : - déterminer un ou plusieurs paramètres d'environnement visuel associés au dispositif d'affichage; - déterminer un risque de suppression visuelle par rivalité oculaire entre un élément de l'environnement visuel et un élément affiché par le dispositif d'affichage en fonction desdits paramètres d'environnement visuel; - en fonction du risque déterminé, ajuster un ou plusieurs paramètres d'affichage du dispositif d'affichage tête haute, un paramètre d'affichage du dispositif d'affichage comprenant un ou plusieurs paramètres comprenant la luminance et/ou la chrominance d'un ou de plusieurs éléments affichés par le dispositif d'affichage, la luminance étant modifiée au cours du temps selon des profils comprenant une ou plusieurs séquences comprenant une séquence de luminance croissante progressive, une séquence de plateau sensiblement constante, une séquence de luminance croissante brusque, une séquence de luminance décroissante progressive. Le terme « dispositif d'affichage » manipulé par l'invention désigne tout système d'affichage intercalé ou interposé entre le système visuel (i.e. les yeux) d'un utilisateur (e.g. chirurgien, pilote, informaticien, etc) et son environnement extérieur (lequel procure donc un « fond visuel »). Il peut donc s'agir d'un système HUD de type monoculaire (lunettes connectées Google Glass), mais également de type binoculaire (e.g. un système HMD qui délivre deux images différentes, une pour chaque oeil. Les systèmes d'affichage dits « bi-oculaires » présentent les mêmes images aux deux yeux et n'ont donc pas de raison de créer de la rivalité oculaire dont l'invention vise à optimiser la gestion. Un pare-brise sur lequel sont projetées des informations de conduite procure des images différentes a l'œil droit et à l'œil gauche et entre donc dans la catégorie des systèmes d'affichage binoculaires.

Dans un mode de réalisation, un paramètre d'environnement visuel comprend un ou plusieurs paramètres parmi le niveau de luminosité ambiante et/ou mesuré à travers le dispositif d'affichage. En première approximation la mesure du niveau de luminosité ambiante, par exemple omnidirectionnelle, permet une gestion efficace en aval de la rivalité oculaire. Dans des modes de réalisation plus sophistiqués (qui demeurent optionnels), il peut être avantageux de mesurer la luminance de manière directionnelle. Par exemple, la luminosité peut être mesurée dans l'axe de la piste, dans une application aéronautique de l'invention. Dans le cas d'une lentille de contact connectée, il est possible de disposer des photorécepteurs disposés à la surface et/ou dans la masse de la lentille de manière à déterminer les luminosités selon les différentes directions d'espace.

Dans un mode de réalisation, un paramètre d'environnement comprend un ou plusieurs paramètres comprenant l'altitude d'un aéronef dans lequel peut être placé le dispositif d'affichage, la trajectoire dudit aéronef et sa position par rapport à une piste d'atterrissage. Dans un mode de réalisation spécifique (aéronautique), les paramètres précités peuvent être prépondérants.

Dans un mode de réalisation, un paramètre d'environnement comprend en outre des paramètres associés à l'activité de l'utilisateur utilisant le système d'affichage. Une pluralité d'activité peut être prédéfinie. A tout moment, il peut être déterminé (e.g. déclaré et/ou calculé) quelle activité est exercée par l'utilisateur (e.g. inactivité, repos, pilotage actif, lecture, écriture, etc). Dans certains modes de réalisation, la connaissance de l'activité réalisée (à un instant donné) par l'utilisateur peut permettre l'optimisation de l'ajustement de l'affichage. Les activités peuvent être diverses mais un principe ou commun fédérateur est que chaque activité de l'utilisateur peut présenter un ou plusieurs risques (de différentes nature selon l'activité, e.g. de prise de décision logique, de sélection sur un écran bureautique, de pilotage d'avion, de conduite automobile, de danger physique devant une machine outil, etc). En d'autres termes, des attributs qualitatifs de l'activité considérée peuvent être quantifiés (e.g. modélisés ou calculés ou déduits ou inférés), c'est-à-dire partitionnés en catégories, chacune étant associée à un risque ou une probabilité, ces risques ou probabilités étant associées entre elles (e.g. scénarios). Par exemple, dans le cas où l'activité concerne l'emploi d'une scie circulaire sur une machine-outil, la position relevée ou abaissée de la protection peut être surveillée (par la machine et/ou l'humain). Le risque en l'espèce est localisé dans l'espace. Le système d'affichage peut afficher un symbole relatif à cet état de sécurité, via le dispositif d'affichage (monoculaire ou binoculaire). Le regard de l'opérateur peut se diriger vers de nombreux endroits. L'extinction visuelle peut alors être gérée de manière à optimiser (i) la perception (physique) du témoin de sécurité i.e. afin d'éviter toute rivalité oculaire et si possible (ii) la perception cognitive du danger (i.e. de tenter de maintenir la rivalité attentionnelle)

Un paramètre d'affichage du dispositif d'affichage comprend un ou plusieurs paramètres comprenant la luminance et/ou la chrominance d'un ou de plusieurs éléments affichés par le dispositif d'affichage. La luminance est le facteur prépondérant, décisif pour la gestion de la rivalité oculaire. De manière additionnelle et optionnelle, la gestion de la chrominance permet d'améliorer encore cette gestion. Dans certains modes de réalisation, la luminance n'est pas modifiée, seule la chrominance est manipulée.

Dans un mode de réalisation, un paramètre d'affichage comprend en outre la géométrie de l'élément affiché, ladite géométrie comprenant des paramètres d'emplacement et/ou de dimensions d'affichage.

De manière additionnelle (et optionnelle) à la gestion de la luminance et/ou de la chrominance, la gestion de la géométrie des éléments affichés permet d'améliorer encore la gestion de la rivalité oculaire.

Différents modes de réalisation sont possibles ; la rivalité oculaire peut être probable, débutante, effective, en cours de disparition, achevée. La rivalité oculaire peut se manifester avant d'en avoir conscience: la rivalité oculaire peut être combattue, par de l'entrainement ou factuellement par des rappels via l'affichage, que ces rappels soient ou non associés à des mesures réelles.

Dans un mode de réalisation, la rivalité oculaire peut être anticipée, a priori. Le fond visuel et/ou l'activité de l'utilisateur peut conduire à estimer que la rivalité oculaire est probable. Par anticipation, de manière proactive, les contre-mesures selon l'invention peuvent être mises en oeuvre.

Dans un mode de réalisation, le procédé comprend en outre l'étape consistant à déterminer indirectement l'émergence ou la présence d'une suppression visuelle par comparaison entre des commandes émises par l'utilisateur du système d'affichage et des instructions affichées. La rivalité oculaire peut être détectée dès son émergence, au moins indirectement. S'il n'existe pas de moyen de détecter une rivalité oculaire par des mesures physiologiques directes, l'émergence de rivalité oculaire, au stade inconscient, peut être déterminée de manière indirecte. Par exemple, des décisions de pilotage qui ne sont pas corroborées par ou consistantes avec des consignes affichées peuvent faire suspecter qu'une suppression visuelle a eu lieu (et le cas échéant déclencher en contre-réaction des mesures de gestion de la rivalité selon l'invention). Par exemple, si une piste d'atterrissage parmi deux est recommandée et que le pilote pousse le manche dans la direction non recommandée, une suppression visuelle peut être suspectée.

Dans un mode de réalisation, le procédé comprend en outre l'étape consistant à déterminer l'émergence ou la présence d'une suppression visuelle par activation d'un actuateur. Une fois consciente (i.e. l'utilisateur a pris conscience du problème visuel), l'activation des contre-mesures peut être déclenchée à la demande. Le mode de surveillance peut d'ailleurs être préalablement activé ou désactivé par l'utilisateur (choix en amont de surveiller la rivalité on/off, puis mise à disposition en aval via un actuateur ou une commande e.g. écran tactile ou vocale pour gérer la rivalité dont l'utilisateur souffre).

Dans un mode de réalisation, le procédé comprend en outre l'étape consistant à prévenir l'émergence d'une suppression visuelle par l'affichage répété et variable dans le temps et/ou dans l'espace d'éléments visuels de rappel. La fréquence (e.g. le rythme) et/ou la forme des rappels peut être configurable de manière à maintenir un niveau d'attention adapté aux circonstances.

Dans un mode de réalisation, l'étape consistant à ajuster un ou plusieurs paramètres d'affichage du dispositif d'affichage est régie par une ou plusieurs règles d'affichage prédéfinies et/ou configurables par l'utilisateur portant le dispositif d'affichage.

Dans un mode de réalisation, la luminance est modifiée au cours du temps selon des profils comprenant une ou plusieurs séquences comprenant une séquence de luminance croissante progressive, une séquence de plateau sensiblement constante, une séquence de luminance croissante brusque, une séquence de luminance décroissante progressive.

Dans un mode de réalisation, une règle d'affichage est fonction du contexte de vol de l'aéronef. Dans un développement, l'étape consistant à déterminer le contexte de vol comprend une ou plusieurs étapes parmi les étapes consistant à déterminer des informations associées à l'état des systèmes de l'aéronef et/ou déterminer des informations associées à l'environnement de l'aéronef et/ou à appliquer des règles logiques prédéfinies auxdites informations déterminées. Dans un développement, l'étape consistant à déterminer le contexte de vol comprend l'étape consistant à recevoir ou détecter un ou plusieurs événements choisis parmi un séquencement de points de plan de vol, un changement de leg actif, une révision du plan de vol, l'introduction d'une commande hold ou la réception d'une clearance du contrôle aérien. Dans un développement, le contexte de vol est déclaré par le pilote. Dans un développement, le contexte de vol est déterminé de manière répétée dans le temps.

Dans un mode de réalisation, un élément affiché est le vecteur vitesse FPV d'un aéronef.

Il est divulgué un produit programme d'ordinateur, ledit programme d'ordinateur comprenant des instructions de code permettant d'effectuer une ou plusieurs des étapes du procédé, lorsque ledit programme est exécuté sur un ordinateur. Il est divulgué un système d'affichage de données, ledit système comprenant un dispositif d'affichage de type monoculaire ou binoculaire, ledit système étant configuré pour - déterminer un ou plusieurs paramètres d'environnement visuel associés au dispositif d'affichage tête haute; - déterminer un risque de suppression visuelle par rivalité oculaire entre un élément de l'environnement visuel et un élément affiché par le dispositif d'affichage en fonction desdits paramètres d'environnement visuel;- en fonction du risque déterminé, ajuster un ou plusieurs paramètres d'affichage du dispositif d'affichage tête haute, un paramètre d'affichage du dispositif d'affichage comprenant un ou plusieurs paramètres comprenant la luminance et/ou la chrominance d'un ou de plusieurs éléments affichés par le dispositif d'affichage, la luminance étant modifiée au cours du temps selon des profils comprenant une ou plusieurs séquences comprenant une séquence de luminance croissante progressive, une séquence de plateau sensiblement constante, une séquence de luminance croissante brusque, une séquence de luminance décroissante progressive.

Dans un mode de réalisation, le système comprend un ou plusieurs capteurs de luminosité, mesurant la luminosité ambiante et/ou la luminosité dans une ou plusieurs directions d'espace de l'environnement visuel et/ou au travers du dispositif d'affichage.

Dans un mode de réalisation, le système d'affichage comprend un ou plusieurs dispositifs de suivi du regard.

Dans un mode de réalisation, le procédé de gestion d'affichage de données est mis en oeuvre dans un système implémenté dans le cockpit d'un aéronef, ce système comprenant un dispositif d'affichage tête haute.

Le procédé comprend les étapes consistant à : - déterminer un ou plusieurs paramètres d'environnement visuel (par exemple 301, 302, 303, 304) associés au dispositif d'affichage tête haute;
- déterminer un risque de suppression visuelle 310 par rivalité oculaire entre un élément de l'environnement visuel et un élément affiché par le dispositif d'affichage tête haute en fonction des paramètres d'environnement visuel;
- en fonction du risque déterminé, ajuster 320 un ou plusieurs paramètres d'affichage du dispositif d'affichage tête haute, un paramètre d'affichage du dispositif d'affichage comprenant un ou plusieurs paramètres comprenant la luminance et/ou la chrominance d'un ou de plusieurs éléments affichés par le dispositif d'affichage, la luminance étant modifiée au cours du temps selon des profils comprenant une ou plusieurs séquences comprenant une séquence de luminance croissante progressive, une séquence de plateau sensiblement constante, une séquence de luminance croissante brusque, une séquence de luminance décroissante progressive.

Dans un mode de réalisation, le procédé comprend une étape consistant à calculer une condition de risque de suppression visuelle (i.e. d'extinction cognitive). A cette fin, selon les modes de réalisation, un ou plusieurs types d'informations (i.e. des données) peuvent être utilisés, notamment la luminosité ambiante 301, l'altitude de vol 302, sa trajectoire dans l'espace 303 ou encore la position dans l'espace de l'aéronef 304 (en particulier par rapport à la piste d'atterrissage). Cette liste n'est pas exhaustive.

Plus en détails, dans un mode de réalisation, un paramètre d'environnement visuel comprend un ou plusieurs paramètres parmi le niveau de luminosité 301 (dans le cockpit et/ou mesuré à travers le dispositif d'affichage tête haute et/ou selon une ou plusieurs directions d'espace dans le champ visuel), l'altitude de l'aéronef 302, la trajectoire de l'aéronef 303 et la position de l'aéronef 304, par exemple par rapport à la piste d'atterrissage.

La radio altitude 302 (qui désigne la hauteur de l'aéronef par rapport au sol) est un paramètre qu'il est avantageux de prendre en compte car il témoigne du risque de suppression visuelle associé aux lampes de la rampe d'approche et/ou de la piste d'atterrissage. Les valeurs prise par la variable « radio latitude » est généralement comprise entre 200 et 600 pieds. Entre ces deux valeurs, les lampes de la rampe d'approche et/ou de la piste d'atterrissage vont entrer en compétition avec l'affichage tête haute du vecteur vitesse. Il s'agit donc d'un intervalle d'altitude qui doit alerter sur les risques de suppression visuelle.

Dans les détails, les lampes de la rampe d'approche appartiennent au PAPI (*Precision Approach Path Indicator*) qui est un instrument aidant à effectuer une approche correcte de la piste d'atterrissage. Il est composé la plupart du temps de quatre lampes en ligne. Lorsque l'angle d'approche est correct, il y a deux lampes de couleur rouge, et deux blanches. Quand l'avion est trop bas, toutes les lampes paraissent rouges, et quand il est trop haut, elles paraissent blanches. Quant au balisage lumineux des pistes, il est variable et peut comprendre un balisage de bord de piste, un balisage d'extrémité de piste, un balisage de seuil de piste, un balisage de prolongement d'arrêt, un balisage d'axe de piste, un balisage des zones de toucher de roues, la ligne d'approche, etc. Toutes ces lampes ou balises peuvent donc interférer à un moment ou à un autre avec l'affichage tête haute, en particulier lors de la phase d'atterrissage.

Un autre paramètre important, considéré seul ou en combinaison avec les autres paramètres, qui n'est pas dépendant du contexte de vol proprement dit, est celui de la luminosité ambiante. En mesurant le cas échéant cette luminosité, il est avantageux d'ajuster le contraste de luminance et/ou de chrominance entre la symbologie affichée et le fond visuel.

Un autre paramètre réside dans la position de l'aéronef par rapport à la piste d'atterrissage. Cette position spatiale peut permettre de déterminer le risque d'extinction cognitive (e.g. calculs des alignements de feux, rampes et autres balises avec l'affichage tête haute). Cette position peut être déterminée de différentes manières (par utilisation d'un ou plusieurs dispositifs ou procédés parmi GPS, reconnaissance d'images, odométrie, gyromètre, compas, accéléromètre, radar, laser, sonar, temps de vol, communication par un système FMS ou un système tiers e.g. ATC, etc). Selon les équipements présents et/ou accessibles, la position dans l'espace pourra être plus ou moins précise. Par exemple, un Flight Management System pourra donner la position de la piste, tandis qu'un récepteur GPS pourra donner la position de l'avion, ce qui permettra d'évaluer la position (distance, orientation de l'aéronef). D'autres instruments peuvent permettre de palier à l'absence de certains équipements. Par exemple en absence de récepteur GPS, il est possible d'utilise des déviations ILS (Instrument Landing System) avec une indication de distance DME (acronyme de « *Distance Measuring Equipment* » en anglais). Cette information, si disponible, peut être utilisée en combinaison avec la trajectoire de l'aéronef.

Un autre paramètre réside dans la trajectoire de l'aéronef. Cette information peut être utilisée pour afficher le vecteur vitesse FPV. Cette information si elle connue permet en connaissant la position de la piste de déterminer, simuler, anticiper ou mesurer (selon les cas) la probabilité (i.e. le risque) que le symbole du vecteur vitesse FPV soit superposé avec un élément visuel extérieur et perturbateur de la piste d'atterrissage.

En fonction des conditions d'environnement visuel (mesurées ou estimées ou simulées), des ajustements d'affichage peuvent être effectués. De manière générale, plusieurs ajustements visuels sont possibles (les ajustements visuels décrits ci-après peuvent être combinés entre eux).

Dans un mode de réalisation, un paramètre (d'ajustement) 320 de l'affichage (du dispositif d'affichage tête haute) comprend un ou plusieurs paramètres comprenant la luminance 321 et/ou la chrominance 322 et optionnellement la géométrie 323 de l'élément affiché.

Dans un mode de réalisation, la géométrie 323 de l'élément affiché comprend ou correspond à des paramètres d'emplacement 3231 et/ou de dimensions d'affichage 3232. D'autres éléments de forme comme la texture et ou la casse / police d'affichage 3234 peuvent être manipulés.

Dans un mode de réalisation, les symboles ou éléments affichés peuvent dans certains cas être déplacés, radicalement ou légèrement. Une certaine stabilité des interfaces homme-machine étant généralement nécessaire (e.g. formation, entraînement, vitesse de réaction, etc), les modifications des emplacements d'affichage sont généralement limités (mais pas impossibles puisque quelques emplacements alternatifs peuvent exister).

Dans un mode de réalisation, les ajustements visuels peuvent être d'ordre géométrique. Un symbole affiché à son emplacement habituel peut par exemple être grossi ou magnifié. En d'autres termes, le symbole dont on détermine un risque de disparition peut être manipulé de manière géométrique de manière à en éviter l'éviction perceptive.

Dans un mode de réalisation, les ajustements visuels peuvent comprendre un ou plusieurs ajustements de la luminance et/ou de la chrominance. Cet ajustement peut évoluer au cours du temps (plus ou moins brusque ou lissé, etc), selon différentes combinaisons. En particulier, les ajustements visuels peuvent suivre une ou plusieurs règles prédéfinies.

Dans un mode de réalisation, le procédé comprend en outre l'étape consistant à détecter l'émergence d'une suppression visuelle par simulation psycho visuelle. Ceci peut être effectué au moyen d'un modèle de vision. Détectée un court instant avant l'apparition consciente ou à bref délai après apparition de celle-ci, il peut être encore temps de procéder à des contre-mesures.

Dans un mode de réalisation (« proactif »), les suppressions visuelles peuvent être anticipées. En d'autres termes, les conditions d'émergence d'une extinction cognitive peuvent être surveillées et corrigées si le risque devient trop important, notamment en l'absence d'une suppression visuelle (avant qu'elle ait commencé). Il s'agit alors d'une gestion du risque. Dans les détails, des scénarios pragmatiques peuvent être utilisés (concrètement, par exemple, le vecteur vitesse FPV affiché dans le monoculaire droit peut être occulté par la rampe latérale droite de la piste d'atterrissage si l'avion est en train d'atterrir).

Dans un mode de réalisation (« réactif »), une extinction cognitive peut être suspectée (i.e. déterminée selon un modèle de vision humaine préexistant) mais éventuellement mesurée (ex post). Des capteurs 3111 (e.g. de suivi du regard « eye tracking », de surveillance du rythme de clignement des yeux, du suivi des pupilles, etc) peuvent alors déterminer qu'un phénomène de suppression visuelle a débuté. Un court moment après le début de la suppression visuelle, les ajustements décrits ci-après peuvent être mis en oeuvre, de manière à annuler ou compenser ou inverser l'extinction cognitive.

Dans un mode de réalisation, l'étape consistant à ajuster 320 un ou plusieurs paramètres d'affichage du dispositif d'affichage tête haute peut être régie ou gouvernée ou influencée par une ou plusieurs règles d'affichage. Une règle d'affichage peut être prédéfinie (par exemple configurée par la compagnie aérienne) et/ou être configurable (par exemple par le pilote de l'aéronef).

Dans un mode de réalisation, une règle d'affichage peut être fonction du contexte de vol de l'aéronef (e.g. phase de vol, événement de vol, contrainte ou objectif opérationnel, etc). Le contexte de vol à un moment donné intègre l'ensemble des actions prises par les pilotes (et notamment les consignes de pilotage effectives) et l'influence de l'environnement extérieur sur l'aéronef. Un "contexte de vol" comprend par exemple une situation parmi des situations prédéfinies ou pré-catégorisées associées à des données telle que la position, la phase de vol, les points de passage, la procédure en cours (et autres). Par exemple, l'aéronef peut être en phase d'approche pour l'atterrissage, en phase de décollage, en phase de croisière mais également en palier ascendant, palier descendant, etc (une variété de situations peut être prédéfinie). Par ailleurs, le "contexte de vol" courant peut être associé à une multitude d'attributs ou de paramètres descriptifs (état météorologique courant, état du trafic, statut du pilote comprenant par exemple un niveau de stress tel que mesuré par des capteurs, etc). Un contexte de vol peut donc également comprendre des données, par exemple filtrées par priorité et/ou fondées sur des données de phase de vol, des problèmes météorologiques, des paramètres avioniques, des négociations ATC, des anomalies liées au statut du vol, des problèmes liés au trafic et/ou au relief. Des exemples de "contexte de vol" comprennent par exemple des contextes tels que "régime croisière / pas de turbulences / stress pilote nominal" ou bien encore "phase atterrissage / turbulences / stress pilote intense". Ces contextes peuvent être structurés selon divers modèles (e.g. hiérarchisés par exemple en arbre ou selon des dépendances diverses, y compris des graphes). Des catégories de contextes peuvent être définies, de manière à synthétiser les besoins en matière d'interaction homme-machine (e.g. délai d'interaction minimal ou maximal, quantité de mots minimale et maximale, etc). Il peut également subsister des règles spécifiques dans certains contextes, notamment d'urgences ou de situations critiques. Les catégories de contextes peuvent être statiques ou dynamique (e.g. configurables). Le procédé peut être implémenté dans un système comprenant des moyens pour déterminer un contexte de vol de l'aéronef, lesdits moyens de détermination comprenant en particulier des règles logiques, lesquelles manipulent des valeurs telles que mesurées par des moyens de mesure physique. En d'autres termes, les moyens de détermination du "contexte de vol" comprennent des moyens de système ou "hardware" ou physiques/tangibles et/ou des moyens logiques (e.g. des règles logiques, par exemple prédéfinies). Par exemple, les moyens physiques comprennent l'instrumentation avionique au sens propre (radars, sondes, etc) qui permettent d'établir des mesures factuelles caractérisant le vol. Les règles logiques représentent l'ensemble des traitements de l'information permettant d'interpréter (e.g. de contextualiser) les mesures factuelles. Certaines valeurs peuvent correspondre à plusieurs contextes et par corrélation et/ou calcul et/ou simulation, il est possible de départager des "contextes" candidats, au moyen de ces règles logiques. Une variété de technologies permet d'implémenter ces règles logiques (logique formelle, logique floue, logique intuitionniste, etc)

Dans un mode de réalisation, l'élément affiché peut être le vecteur vitesse FPV de l'aéronef. La mise en oeuvre de l'invention est alors particulièrement avantageuse, d'autant plus que la phase d'atterrissage est une phase critique du vol.

Dans un mode de réalisation, le système d'affichage comprend un ou plusieurs capteurs de luminosité mesurant la luminosité dans le cockpit, dans une ou plusieurs directions d'espace de l'environnement visuel et/ou au travers du dispositif d'affichage tête haute.

Dans un mode de réalisation, le système d'affichage comprend un ou plusieurs dispositifs de suivi du regard (par exemple 3111), lesdits dispositifs pouvant déterminer ou contribuer à déterminer ou anticiper un risque de suppression visuelle.

Dans un mode de réalisation, le dispositif d'affichage tête haute est de type monoculaire. Il peut être binoculaire dans certains modes de réalisation.

Il est décrit un produit programme d'ordinateur, ce programme d'ordinateur comprenant des instructions de code permettant d'effectuer une ou plusieurs des étapes du procédé lorsque ce programme est exécuté sur un ordinateur.

Dans un mode de réalisation, le système d'affichage de données est implémenté dans le cockpit d'un aéronef. Ce système peut comprendre un dispositif d'affichage tête haute, et ce système peut être configuré pour
- déterminer un ou plusieurs paramètres d'environnement visuel associés au dispositif d'affichage tête haute; - déterminer un risque de suppression visuelle par rivalité oculaire entre un élément de l'environnement visuel et un élément affiché par le dispositif d'affichage tête haute en fonction desdits paramètres d'environnement visuel;- en fonction du risque déterminé, ajuster un ou plusieurs paramètres d'affichage du dispositif d'affichage tête haute, un paramètre d'affichage du dispositif d'affichage comprenant un ou plusieurs paramètres comprenant la luminance et/ou la chrominance d'un ou de plusieurs éléments affichés par le dispositif d'affichage, la luminance étant modifiée au cours du temps selon des profils comprenant une ou plusieurs séquences comprenant une séquence de luminance croissante progressive, une séquence de plateau sensiblement constante, une séquence de luminance croissante brusque, une séquence de luminance décroissante progressive.

Dans un mode de réalisation, le système d'affichage peut comprendre un ou plusieurs capteurs de luminosité et/ou ou plusieurs dispositifs de suivi du regard.

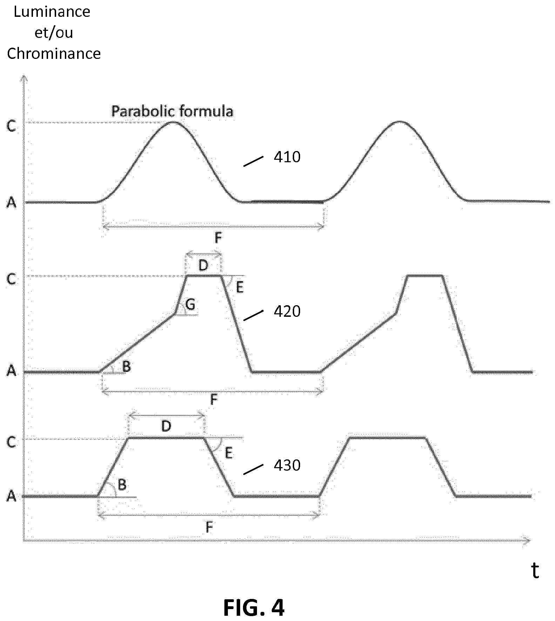

La figure 4 montre quelques exemples spécifiques de l'ajustement de l'affichage et en particulier illustre des exemples de profils de variation de la luminance et/ou de la chrominance.

La figure montre trois profils (410, 420, 430) illustrant l'intensité des manipulations de forme et/ou de fond effectuées sur l'élément affiché susceptible de faire l'objet d'une suppression visuelle.

Une manipulation peut être celle consistant à modifier la luminance, ainsi qu'illustré à la figure 4.

Le niveau indiqué A) illustre le niveau de luminance le plus bas. Le facteur B) représente le taux d'augmentation de la luminance (qui peut être encadré, depuis une variation graduelle à une variation brusque). Le niveau indiqué C) représente le niveau de luminance le plus haut. Le caractère D) indique la durée de la phase de plateau haut. Le facteur E) représente le taux de réduction de la luminance, qui peut également être plus ou moins progressif (avec des paliers ou des taux intermédiaires illustrés par le caractère G)). La double-flèche F montre la durée du cycle complet.

Concernant les manipulations de forme (géométriques), dans un mode de réalisation, l'élément affiché susceptible de faire l'objet d'une suppression visuelle peut être affiché avec des traits plus épais pendant un certain intervalle de temps F (par exemple 50 millisecondes) pour ensuite revenir à son tracé normal. Les exemples figurés peuvent être combinés entre eux. En fonction de la luminosité, les manipulations graphiques pourront être modulées. Par exemple, l'épaississement des traits des éléments affichés pourra être plus important de jour que de nuit. Dans certains cas, inversement l'extinction d'un symbole donné pourra être plus probable de nuit que de jour.

Dans un mode de réalisation, le procédé est mis en oeuvre par ordinateur.

A titre d'exemple d'architecture matérielle adaptée à mettre en oeuvre l'invention, un dispositif peut comporter un bus de communication auquel sont reliés une unité centrale de traitement ou microprocesseur (CPU, acronyme de « *Central Processing Unit »* en anglais), lequel processeur peut être *"multi-core"* ou *"many-core";* une mémoire morte (ROM, acronyme de « *Read Only Memory »* en anglais) pouvant comporter les programmes nécessaires à la mise en oeuvre de l'invention; une mémoire vive ou mémoire cache (RAM, acronyme de *« Random Access Memory* » en anglais) comportant des registres adaptés à enregistrer des variables et paramètres créés et modifiés au cours de l'exécution des programmes précités ; et une interface de communication ou E/S (I/O acronyme de « *Input*/*ouput* » en anglais) adaptée à transmettre et à recevoir des données. Dans le cas où l'invention est implantée sur une machine de calcul reprogrammable (par exemple un circuit FPGA), le programme correspondant (c'est-à-dire la séquence d'instructions) peut être stocké dans ou sur un médium de stockage amovible (par exemple une carte SD, ou un stockage de masse tel que un disque dur e.g. un SSD) ou non-amovible, volatile ou non-volatile, ce médium de stockage étant lisible partiellement ou totalement par un ordinateur ou un processeur. La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur, comme des web services ou SOA ou via des interfaces de programmation API) qui peut être utilisé pour programmer un ou plusieurs processeurs pour mettre en œuvre des aspects des techniques décrites ici. Les moyens ou ressources informatiques peuvent notamment être distribués (*"Cloud computing"*), éventuellement avec ou selon des technologies de pair-à-pair et/ou de virtualisation. Le code logiciel peut être exécuté sur n'importe quel processeur approprié (par exemple, un microprocesseur) ou coeur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif). Des technologies de sécurisation (crypto-processeurs, authentification éventuellement biométrique, chiffrement, carte à puce, etc) peuvent être utilisées.

## Revendications

1. Procédé de gestion d'affichage de données mis en oeuvre dans un dispositif d'affichage tête haute de type monoculaire ou binoculaire, comprenant les étapes consistant à :
- déterminer un ou plusieurs paramètres d'environnement visuel associés au dispositif d'affichage;
- déterminer un risque de suppression visuelle par rivalité oculaire entre un élément de l'environnement visuel et un élément affiché par le dispositif d'affichage en fonction desdits paramètres d'environnement visuel;
- en fonction du risque déterminé, ajuster un ou plusieurs paramètres d'affichage du dispositif d'affichage tête haute ;
**caractérisé en ce qu'** un paramètre d'affichage du dispositif d'affichage comprenant un ou plusieurs paramètres comprenant la luminance et/ou la chrominance d'un ou de plusieurs éléments affichés par le dispositif d'affichage ;
la luminance étant modifiée au cours du temps selon des profils comprenant une ou plusieurs séquences comprenant une séquence de luminance croissante progressive, une séquence de plateau sensiblement constante, une séquence de luminance croissante brusque, une séquence de luminance décroissante progressive.

2. Procédé selon la revendication 1, un paramètre d'environnement visuel comprenant un ou plusieurs paramètres parmi le niveau de luminosité ambiante et/ou mesuré à travers le dispositif d'affichage.

3. Procédé selon la revendication 2, un paramètre d'environnement comprenant un ou plusieurs paramètres comprenant l'altitude d'un aéronef dans lequel est placé le dispositif d'affichage, la trajectoire dudit aéronef et sa position par rapport à une piste d'atterrissage.

4. Procédé selon la revendication 2, un paramètre d'environnement comprenant en outre des paramètres associés à l'activité de l'utilisateur utilisant le système d'affichage.

5. Procédé selon la revendication 1, un paramètre d'affichage comprenant en outre la géométrie de l'élément affiché, ladite géométrie comprenant des paramètres d'emplacement et/ou de dimensions d'affichage.

6. Procédé selon la revendication 1, comprenant en outre l'étape consistant à déterminer indirectement l'émergence ou la présence d'une suppression visuelle par comparaison entre des commandes émises par l'utilisateur du système d'affichage et des instructions affichées.

7. Procédé selon la revendication 1, comprenant en outre l'étape consistant à déterminer l'émergence ou la présence d'une suppression visuelle par activation d'un actuateur.

8. Procédé selon la revendication 1, comprenant en outre l'étape consistant à prévenir l'émergence d'une suppression visuelle par l'affichage répété et variable dans le temps et/ou dans l'espace d'éléments visuels de rappel.

9. Procédé selon la revendication 1, l'étape consistant à ajuster un ou plusieurs paramètres d'affichage du dispositif d'affichage étant régie par une ou plusieurs règles d'affichage prédéfinies et/ou configurables par l'utilisateur portant le dispositif d'affichage.

10. Procédé selon les revendications 1 et 9, une règle d'affichage étant fonction du contexte de vol de l'aéronef.

11. Procédé selon la revendication 1, un élément affiché étant le vecteur vitesse FPV d'un aéronef.

12. Un produit programme d'ordinateur, ledit programme d'ordinateur comprenant des instructions de code permettant d'effectuer les étapes du procédé selon l'une quelconque des revendications 1 à 11, lorsque ledit programme est exécuté sur un ordinateur.

13. Système d'affichage de données, ledit système comprenant un dispositif d'affichage de type monoculaire ou binoculaire tête haute, ledit système étant configuré pour
- déterminer un ou plusieurs paramètres d'environnement visuel associés au dispositif d'affichage tête haute;
- déterminer un risque de suppression visuelle par rivalité oculaire entre un élément de l'environnement visuel et un élément affiché par le dispositif d'affichage en fonction desdits paramètres d'environnement visuel;
- en fonction du risque déterminé, ajuster un ou plusieurs paramètres d'affichage du dispositif d'affichage ;
un paramètre d'affichage du dispositif d'affichage comprenant un ou plusieurs paramètres comprenant la luminance et/ou la chrominance d'un ou de plusieurs éléments affichés par le dispositif d'affichage ;
la luminance étant modifiée au cours du temps selon des profils comprenant une ou plusieurs séquences comprenant une séquence de luminance croissante progressive, une séquence de plateau sensiblement constante, une séquence de luminance croissante brusque, une séquence de luminance décroissante progressive.

14. Système d'affichage selon la revendication 13, comprenant un ou plusieurs capteurs de luminosité, mesurant la luminosité ambiante et/ou la luminosité dans une ou plusieurs directions d'espace de l'environnement visuel et/ou au travers du dispositif d'affichage.

15. Système d'affichage selon la revendication 13, le dispositif d'affichage comprenant un ou plusieurs dispositifs de suivi du regard.

## Patentansprüche

1. Verfahren zum Verwalten der Anzeige von Daten, implementiert in einem monokularen oder binokularen Head-up-Display, das die folgenden Schritte umfasst:
- Bestimmen eines oder mehrerer visueller Umgebungsparameter, die mit dem Display assoziiert sind;
- Bestimmen eines Risikos der visuellen Unterdrückung durch Augenrivalität zwischen einem Element der visuellen Umgebung und einem von dem Display angezeigten Element in Abhängigkeit von den visuellen Umgebungsparametern;
- Justieren, in Abhängigkeit von dem bestimmten Risiko, eines oder mehrerer Anzeigeparameter des Head-up-Displays;
**dadurch gekennzeichnet, dass** ein Anzeigeparameter des Displays einen oder mehrere Parameter umfasst, die die Luminanz und/oder Chrominanz eines oder mehrerer von dem Display angezeigter Elemente umfassen;
wobei die Luminanz im Laufe der Zeit gemäß Profilen modifiziert wird, die eine oder mehrere Sequenzen umfassen, die eine progressiv ansteigende Luminanzsequenz, eine im Wesentlichen konstante Plateausequenz, eine abrupt ansteigende Luminanzsequenz und eine progressiv abfallende Luminanzsequenz umfassen.

2. Verfahren nach Anspruch 1, wobei ein visueller Umgebungsparameter einen oder mehrere Parameter aus dem Umgebungslichtpegel und/oder gemessen durch das Display umfasst.

3. Verfahren nach Anspruch 2, wobei ein Umgebungsparameter einen oder mehrere Parameter umfasst, die Folgendes umfassen: die Höhe eines Flugzeugs, in dem sich das Display befindet, die Flugbahn des Flugzeugs und seine Position relativ zu einer Landebahn.

4. Verfahren nach Anspruch 2, wobei ein Umgebungsparameter ferner Parameter umfasst, die mit der Aktivität des das Anzeigesystem verwendenden Benutzers assoziiert sind.

5. Verfahren nach Anspruch 1, wobei ein Anzeigeparameter ferner die Geometrie des angezeigten Elements umfasst, wobei die Geometrie Anzeigeorts- und/oder - größenparameter umfasst.

6. Verfahren nach Anspruch 1, das ferner den Schritt des indirekten Bestimmens des Auftretens oder Vorliegens einer visuellen Unterdrückung durch Vergleichen der vom Benutzer des Anzeigesystems emittierten Befehle und der angezeigten Anweisungen umfasst.

7. Verfahren nach Anspruch 1, das ferner den Schritt des Bestimmens des Auftretens oder Vorliegens einer visuellen Unterdrückung durch Aktivieren eines Aktuators umfasst.

8. Verfahren nach Anspruch 1, das ferner den Schritt des Verhütens des Auftretens einer visuellen Unterdrückung durch wiederholtes und zeitlich und/oder räumlich variierendes Anzeigen von visuellen Erinnerungselementen umfasst.

9. Verfahren nach Anspruch 1, wobei der Schritt des Justierens eines oder mehrerer Anzeigeparameter des Displays, das durch einen oder mehrere von dem das Display tragenden Benutzer vordefinierte und/oder konfigurierbare Anzeigesteuerungen gesteuert wird.

10. Verfahren nach den Ansprüchen 1 und 9, wobei eine Anzeigesteuerung vom Flugkontext des Flugzeugs abhängig ist.

11. Verfahren nach Anspruch 1, wobei ein angezeigtes Element der FPV-Geschwindigkeitsvektor eines Flugzeugs ist.

12. Computerprogrammprodukt, wobei das Computerprogramm Codebefehle umfasst, die die Durchführung der Schritte des Verfahrens nach einem der Ansprüche 1 bis 11 zulassen, wenn das Programm auf einem Computer ausgeführt wird.

13. Datenanzeigesystem, wobei das System ein monokulares oder binokulares Head-up-Display umfasst,
wobei das System konfiguriert ist zum
- Bestimmen eines oder mehrerer visueller Umgebungsparameter, die mit dem Head-up-Display assoziiert sind;
- Bestimmen eines Risikos einer visuellen Unterdrückung durch Augenrivalität zwischen einem Element der visuellen Umgebung und einem von dem Display angezeigten Element in Abhängigkeit von den visuellen Umgebungsparametern;
- Justieren, in Abhängigkeit von dem bestimmten Risiko, eines oder mehrerer Anzeigeparameter des Displays;
wobei ein Anzeigeparameter des Displays einen oder mehrere Parameter umfasst, die die Luminanz und/oder Chrominanz eines oder mehrerer von dem Display angezeigter Elemente umfasst;
wobei die Luminanz im Laufe der Zeit gemäß Profilen variiert wird, die eine oder mehrere Sequenzen umfassen, die eine progressiv ansteigende Luminanzsequenz, eine im Wesentlichen konstante Plateausequenz, eine abrupt ansteigende Luminanzsequenz, eine progressiv abfallende Luminanzsequenz umfassen.

14. Anzeigesystem nach Anspruch 13, welches einen oder mehrere Helligkeitssensoren umfasst, die die Umgebungshelligkeit und/oder die Helligkeit in einer oder mehreren Raumrichtungen der visuellen Umgebung und/oder durch das Display messen.

15. Anzeigesystem nach Anspruch 13, wobei das Display eine oder mehrere Blickverfolgungsvorrichtungen umfasst.

## Claims

1. Data display management method, implemented in a monocular or binocular head-up display device, comprising the steps of:
- determining one or more visual surroundings parameters associated with the display device;
- determining a risk of visual suppression by ocular rivalry between an element of the visual surroundings and an element displayed by the display device on the basis of said visual surroundings parameters;
- on the basis of the determined risk, adjusting one or more display parameters of the head-up display device;
**characterized in that** a display parameter of the display device comprises one or more parameters comprising the luminance and/or the chrominance of one or of several elements displayed by the display device;
the luminance being modified over time according to profiles comprising one or more sequences comprising a sequence of gradual increasing luminance, a sequence of a substantially constant plateau, a sequence of sudden increasing luminance, a sequence of gradual decreasing luminance.

2. Method according to Claim 1, one visual surroundings parameter comprising one or more parameters from among the ambient brightness level and/or measured through the display device.

3. Method according to Claim 2, one surroundings parameter comprising one or more parameters comprising the altitude of an aircraft in which the display device is situated, the path of said aircraft and its position in relation to a runway.

4. Method according to Claim 2, one surroundings parameter further comprising parameters associated with the activity of the user using the display system.

5. Method according to Claim 1, one display parameter comprising the geometry of the displayed element, said geometry comprising said geometry comprising location and/or display dimension parameters.

6. Method according to Claim 1, further comprising the step of indirectly determining the emergence or the presence of visual suppression by comparison between commands emitted by the user of the display system and instructions that are displayed.

7. Method according to Claim 1, further comprising the step of determining the emergence or the presence of visual suppression by activation of an actuator.

8. Method according to Claim 1, further comprising the step of preventing the emergence of visual suppression by the repeated display, variable over time and/or in space, of visual reminder elements.

9. Method according to Claim 1, the step of adjusting one or more display parameters of the display device being governed by one or more display rules that are predefined and/or able to be configured by the user wearing the display device.

10. Method according to Claims 1 and 9, a display rule depending on the flight context of the aircraft.

11. Method according to Claim 1, one element that is displayed being the flight path vector FPV of an aircraft.

12. Computer program product, said computer program comprising code instructions for carrying out the steps of the method according to any one of Claims 1 to 11 when said program is executed on a computer.

13. Data display system, said system comprising a monocular or binocular head-up display device, said system being configured to
- determine one or more visual surroundings parameters associated with the head-up display device;
- determine a risk of visual suppression by ocular rivalry between an element of the visual surroundings and an element displayed by the display device on the basis of said visual surroundings parameters;
- on the basis of the determined risk, adjust one or more display parameters of the display device;
a display parameter of the display device comprising one or more parameters comprising luminance and/or chrominance of displayed by the display device;
the luminance being modified over time according to profiles comprising one or more sequences comprising a sequence of gradual increasing luminance, a sequence of a substantially constant plateau, a sequence of sudden increasing luminance, a sequence of gradual decreasing luminance.

14. Display system according to Claim 13, comprising one or more brightness sensors measuring the ambient brightness and/or the brightness in one or more directions in space of the visual surroundings and/or through the display device.

15. System according to Claim 13, the display system comprising one or more gazetracking devices.
